(19) Europäisches Patentamt / European Patent Office / Office européen des brevets

(11) **EP 3 802 013 B1**

(12) **EUROPÄISCHE PATENTSCHRIFT**

(45) Veröffentlichungstag und Bekanntmachung des Hinweises auf die Patenterteilung:
**15.02.2023 Patentblatt 2023/07**

(21) Anmeldenummer: **19727273.5**

(22) Anmeldetag: **03.06.2019**

(51) Internationale Patentklassifikation (IPC):
**B25J 9/16** (1985.01)          **G05B 19/404** (1995.01)

(52) Gemeinsame Patentklassifikation (CPC):
**B25J 9/1633; G05B 19/404;** G05B 2219/39199;
G05B 2219/39241; G05B 2219/39319;
G05B 2219/42219

(86) Internationale Anmeldenummer:
**PCT/EP2019/064321**

(87) Internationale Veröffentlichungsnummer:
**WO 2019/233940 (12.12.2019 Gazette 2019/50)**

(54) **KRAFTREGELUNG EINES ROBOTERS**

FORCE CONTROL FOR A ROBOT

RÉGLAGE DE LA FORCE D'UN ROBOT

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **07.06.2018 DE 102018209044**

(43) Veröffentlichungstag der Anmeldung:
**14.04.2021 Patentblatt 2021/15**

(73) Patentinhaber: **KUKA Deutschland GmbH
86165 Augsburg (DE)**

(72) Erfinder:
• **KURZE, Matthias
85221 Dachau (DE)**
• **SEDLMAYR, Andreas
82256 Fürstenfeldbruck (DE)**

(74) Vertreter: **Wallinger Ricker Schlotter Tostmann
Patent- und Rechtsanwälte mbB
Zweibrückenstraße 5-7
80331 München (DE)**

(56) Entgegenhaltungen:
**EP-A2- 2 492 062          AT-A4- 507 088
DE-A1-102009 025 683**

EP 3 802 013 B1

## Beschreibung

Die vorliegende Erfindung betrifft ein Verfahren zur Kraftregelung eines Roboters sowie ein System und Computerprogrammprodukt zur Durchführung des Verfahrens. Aus der eigenen DE 10 2011 003 506 A1 ist ein Industrieroboter bekannt, wobei eine Steuervorrichtung mit elektrischen Antrieben, die zum Bewegen hintereinander angeordneter, bezüglich Achsen bewegbarer Glieder eines Roboterarms vorgesehen sind, verbunden und eingerichtet ist, die elektrischen Antriebe mittels einer Regelvorrichtung kraftgeregelt anzusteuern, welche aufgrund einer vom Roboterarm auszuübenden Soll-Last von den Antrieben aufzubringende Soll-Drehmomente ermittelt.

Tritt ein solcher Industrieroboter, gegebenenfalls planmäßig, beispielsweise zum Greifen oder Bearbeiten eines Bauteils oder aufgrund einer Bewegung eines Werkstücks bei stehendem oder bewegtem Roboter, in Kontakt mit seiner Umgebung, was vorliegend als Kollision bezeichnet wird, so kann es hierbei zu, insbesondere reglerinduzierten, Instabilitäten kommen, was auch als "Prellen", "Hämmern" bzw. "Klopfen" bezeichnet wird.

Aufgabe der vorliegenden Erfindung ist es, den Betrieb eines Roboters zu verbessern. Diese Aufgabe wird durch ein Verfahren mit den Merkmalen des Anspruchs 1 gelöst. Ansprüche 6, 7 stellen ein System bzw. Computerprogrammprodukt zur Durchführung eines hier beschriebenen Verfahrens unter Schutz. Die Unteransprüche betreffen vorteilhafte Weiterbildungen.

Erfindungsgemäß werden zu bzw. bei einer Kraftregelung eines Roboters Antriebe des Roboters auf Basis bzw. in Abhängigkeit von einem ersten Soll-Anteil und einem zweiten Soll-Anteil kommandiert, insbesondere auf Basis bzw. in Abhängigkeit von einer Summe aus erstem und zweitem Soll-Anteil, wobei in einer Ausführung Soll-Antriebskräfte für die Antriebe auf Basis bzw. in Abhängigkeit von dem ersten und zweiten Soll-Anteil ermittelt und an die Antriebe ausgegeben werden.

In einer Ausführung werden die Soll-Antriebskräfte als Summe aus erstem und zweitem Soll-Anteil ermittelt. In einer anderen Ausführung werden die Antriebe auf Basis bzw. in Abhängigkeit von einem oder mehreren weiteren Soll-Anteilen kommandiert bzw. weisen die Soll-Antriebskräfte zusätzlich zu der Summe aus erstem und zweitem Soll-Anteil einen oder mehrere weitere Soll-Anteile auf.

Der Roboter weist in einer Ausführung wenigstens drei, insbesondere wenigstens sechs, in einer Ausführung wenigstens sieben, (Bewegungs)Achsen bzw. Gelenke, insbesondere Drehachsen bzw. -gelenke, insbesondere einen Roboterarm mit den Achsen bzw. Gelenken auf. Die Antriebe sind in einer Ausführung elektrische Antriebe, sie können insbesondere Elektromotoren und/oder Getriebe aufweisen.

Die vorliegende Erfindung ist für solche Roboter aufgrund ihrer Einsatzmöglichkeiten bzw. Verwendungen besonders vorteilhaft.

Gegensinnig parallele Kräftepaare bzw. Drehmomente werden vorliegend zur kompakteren Darstellung verallgemeinernd ebenfalls als Kräfte oder Lasten bezeichnet, so dass insbesondere eine Soll-Antriebskraft bzw. eine Soll- bzw. Ist-Last (jeweils) auch ein Soll-Antriebsdrehmoment bzw. ein Soll- bzw. Ist-Lastdrehmoment aufweisen, insbesondere sein kann.

Erfindungsgemäß wird der erste Soll-Anteil auf Basis bzw. in Abhängigkeit von einem ersten Regeldifferenz-Anteil ermittelt, der auf Basis bzw. in Abhängigkeit von, insbesondere mithilfe, wenigstens einer Tiefpassfilterung einer Regeldifferenz zwischen einer vom Roboter auszuübenden Soll-Last und einer als vom Roboter ausgeübt erfassten Ist-Last ermittelt wird.

Die vom Roboter auszuübende Soll-Last kann in einer Ausführung eine, insbesondere kartesische, Soll-Kraft und/oder ein, insbesondere kartesisches, Soll-Drehmoment aufweisen, insbesondere sein, die bzw. das der Roboter, in einer Ausführung mit seinem Endeffektor, auf eine Umgebung ausüben bzw. aufprägen soll. Sie ist bzw. wird in einer Ausführung, insbesondere vorab, vorgegeben, insbesondere abgespeichert.

Durch solche Soll-Lasten können in einer Ausführung Bauteile vorteilhaft gegriffen und/oder bearbeitet werden.

Die Ist-Last wird in einer Ausführung mithilfe wenigstens eines, insbesondere mehrachsigen, Kraft- und/oder Momenten-Sensors (als vom Roboter ausgeübt) erfasst, der in einer Ausführung an einem Endflansch bzw. -effektor des Roboters angeordnet ist.

Hierdurch kann die Ist-Last in einer Ausführung besonders vorteilhaft, insbesondere zuverlässig und/oder präzise, in einer Ausführung mit hoher, insbesondere zeitlicher, Auflösung erfasst werden.

Eine Tiefpassfilterung dämpft in einer Ausführung (wenigstens) einen Anteil der Regeldifferenz, der eine zweite Frequenz aufweist, stärker als (wenigstens) einen Anteil der Regeldifferenz, der eine erste Frequenz aufweist, welche kleiner als die zweite Frequenz ist. Sie kann in einer Weiterbildung durch ein sogenanntes PT1-Glied implementiert sein bzw. werden.

Erfindungsgemäß wird der zweite Soll-Anteil auf Basis bzw. in Abhängigkeit von einem zweiten Regeldifferenz-Anteil ermittelt, der seinerseits auf Basis bzw. in Abhängigkeit von einer Differenz-Last zwischen der Regeldifferenz und dem ersten Regeldifferenz-Anteil ermittelt wird.

Einer Ausführung der vorliegenden Erfindung liegt die Idee zugrunde, eine Kraftregelung, wie sie beispielsweise aus der eingangs genannten DE 10 2011 003 506 A1 bekannt ist, mit einer tiefpassgefilterten Regeldifferenz durchzuführen und dieser eine Störgrößenregelung zu überlagern, die den dabei ausgefilterten Regeldifferenz-Anteil berücksichtigt.

Tritt der Roboter, in einer Ausführung planmäßig bzw. in vorgegebener Weise, beispielsweise zum Greifen oder Bearbeiten eines Bauteils, in Kontakt mit seiner Umgebung ("Kollision"), so entstehen dabei häufig Kraft- und/oder Momenten- bzw. Drallpulse mit kurzen Pulsweiten und hohen Amplituden.

Durch die Tiefpassfilterung beeinträchtigen diese die Kraftregelung auf Basis des ersten Regeldifferenz-Anteils nicht oder nur in geringerem Maße, sie werden sozusagen herausgewaschen ("Washout"). Dadurch kann in einer Ausführung diese Kraftregelung auf Basis des ersten Regeldifferenz-Anteils vorteilhaft, insbesondere sensitiv(er), präzise(r) und/oder stabil(er), ausgebildet werden.

Durch die Störgrößenregelung auf Basis des zweiten Regeldifferenz-Anteils kann der Roboter auf diese Kraftpulse jedoch nun gleichwohl vorteilhaft, insbesondere schnell, präzise und/oder stabil, reagieren.

Insbesondere hierzu wird in einer Ausführung der zweite Soll-Anteil derart bzw. mit der Maßgabe ermittelt, dass der Roboter einer Reaktionskraft, die infolge einer, in einer Ausführung planmäßigen bzw. vorgegebenen, Kollision des Roboters, insbesondere seines Endeffektors, mit der Umgebung auf den Roboter wirkt, ausweicht.

Dadurch kann in einer Ausführung ein aus einer solchen Kollision resultierender Kraftpuls auf den Roboter wenigstens teilweise absorbiert werden.

In einer Ausführung ist der zweite Soll-Anteil gleichsinnig bzw. -gerichtet zu dem zweiten Regeldifferenz-Anteil bzw. wird gleichsinnig bzw. -gerichtet zu dem zweiten Regeldifferenz-Anteil ermittelt.

Dadurch kann in einer Ausführung ein Kraftpuls auf den Roboter besonders vorteilhaft wenigstens teilweise absorbiert werden.

In einer Ausführung wird der zweite Soll-Anteil auf Basis bzw. in Abhängigkeit von einem abgespeicherten, insbesondere mehrdimensionalen, Massenparameter des Roboters ermittelt, welcher in einer Ausführung von einer, insbesondere angenommenen bzw. theoretischen, Massenverteilung des Roboters abhängt und in einer Ausführung durch Simulation, empirisch und/oder auf Basis von Konstruktions-, insbesondere CAD-Daten, des Roboters ermittelt wird bzw. ist. In einer Ausführung kann der Massenparameter insbesondere die, insbesondere abtriebsseitige, Massenmatrix des Roboters und/oder eine Diagonalmatrix mit den, insbesondere auf die Antriebsachsen bzw. -wellen der Antriebe bezogenen, Trägheitsmomenten der Antriebe aufweisen bzw. definieren.

Entsprechend wird in einer Ausführung der zweite Soll-Anteil $\tau_{\mathrm{cmd},\,2}$ gemäß

$$\tau_{\mathrm{cmd},\,2} = \mathrm{diag}(\mathrm{J_m}) \cdot \mathrm{diag}(\eta) \cdot \boldsymbol{A}^{-1}(\boldsymbol{q}) \cdot \boldsymbol{J}^{\mathsf{T}} \cdot \Delta \boldsymbol{F}_2 \qquad (1)$$

mit:

$\mathrm{diag}(\mathrm{J_m})$   Diagonalmatrix der auf die Antriebsachsen bzw. -wellen der Antriebe bezogenen Trägheitsmomente der Antriebe;

$\mathrm{diag}(\eta)$   Diagonalmatrix der mechanischen Wirkungsgrade der Antriebe;

$\boldsymbol{A}^{-1}$   Inverse der abtriebsseitigen Massenmatrix $\boldsymbol{A}$ des Roboters, d.h. ohne Motorwellen- bzw. Antriebsachsenträgheit

$\boldsymbol{q}$   Gelenkkoordinaten, beispielsweise Achswinkel, des Roboters

$\boldsymbol{J}^{\mathsf{T}}$   transponierte Jacobimatrix der Endeffektorpose $\boldsymbol{x}$ des Roboters (dx/dt = $\boldsymbol{J}\cdot$d$\boldsymbol{q}$/dt)

$\Delta \boldsymbol{F}_2$   zweiter Regeldifferenz-Anteil

ermittelt. Dadurch kann in einer Ausführung ein Kraftpuls auf den Roboter besonders vorteilhaft wenigstens teilweise absorbiert werden.

In einer Ausführung wird der erste Soll-Anteil auf Basis bzw. in Abhängigkeit einer Proportional-Integral-Regelung, insbesondere einer Proportional-Integral-Regelung mit, in einer Ausführung dynamisch, begrenztem Integral-Anteil, und/oder einem Dynamikmodell des Roboters ermittelt. Hierzu wird ergänzend auf die eingangs genannte DE 10 2011 003 506 A1 Bezug genommen und deren Inhalt vollständig in die vorliegende Offenbarung einbezogen.

Hierdurch kann die Ist-Last in einer Ausführung besonders vorteilhaft, insbesondere zuverlässig und/oder präzise, in einer Ausführung mit hoher, insbesondere zeitlicher, Auflösung erfasst werden.

Erfindungsgemäß ist ein System, insbesondere hard- und/oder software-, insbesondere programmtechnisch, zur Durchführung eines Verfahrens nach Anspruch 1 eingerichtet.

In einer Ausführung weist das System bzw. sein(e) Mittel auf:

- Mittel zum Ermitteln des zweiten Soll-Anteils derart, dass der Roboter einer Reaktionskraft infolge einer Kollision ausweicht; und/oder
- Mittel zum Ermitteln des zweiten Soll-Anteils gleichsinnig zu dem zweiten Regeldifferenz-Anteil; und/oder

- Mittel zum Ermitteln des zweiten Soll-Anteils auf Basis eines abgespeicherten Massenparameters des Roboters; und/oder
- Mittel zum Ermitteln des ersten Soll-Anteils auf Basis einer Proportional-Integral-Regelung, insbesondere mit begrenztem Integral-Anteil, und/oder eines Dynamikmodells des Roboters.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den Roboter steuern bzw. regeln kann. Ein Computerprogrammprodukt kann in einer Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch das System bzw. sein(e) Mittel. In einer Ausführung weist das System den Roboter auf.

Weitere Vorteile und Merkmale ergeben sich aus den Unteransprüchen und den Ausführungsbeispielen. Hierzu zeigt, teilweise schematisiert:

Fig. 1:     ein System zur Kraftregelung eines Roboters nach einer Ausführung der vorliegenden Erfindung;

Fig. 2:     ein Verfahren zur Kraftregelung des Roboters nach einer Ausführung der vorliegenden Erfindung; und

Fig. 3:     eine Abwandlung des Verfahrens der Fig. 2 nach einer Ausführung der vorliegenden Erfindung.

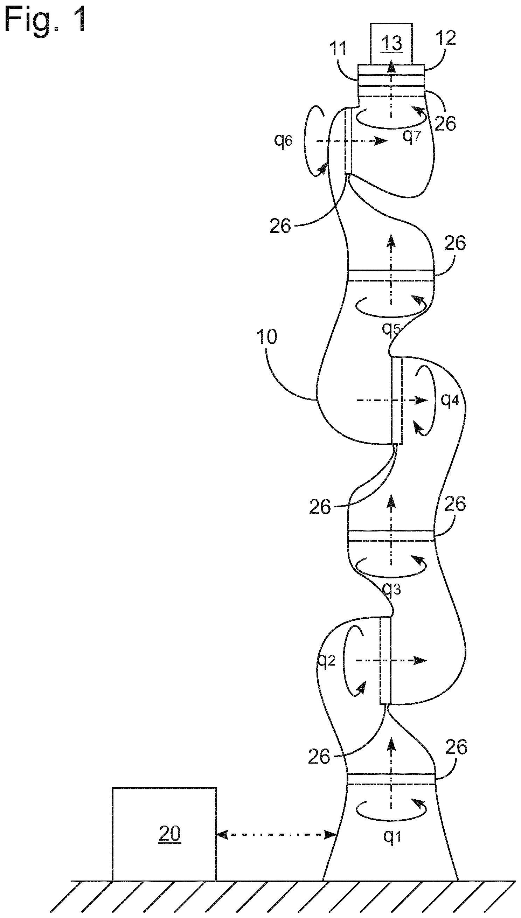

Fig. 1 zeigt einen siebenachsigen Roboter(arm) 10 mit Antrieben 26, einem Endflansch 11, einem Kraft-Momenten-Sensor 12, einem Endeffektor 13 und Achs- bzw. Gelenkwinkeln $q = [q_1,...,q_7]^T$ sowie eine Robotersteuerung 20.

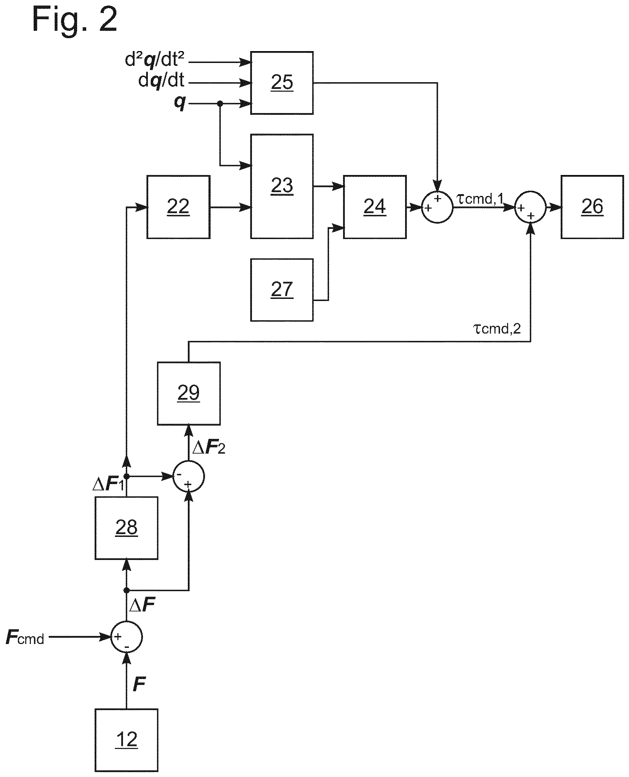

Diese weist eine in Fig. 2 angedeutete Struktur auf, wobei Fig. 2 zugleich ein hiervon durchgeführtes Verfahren zur Kraftregelung des Roboters nach einer Ausführung der vorliegenden Erfindung illustriert.

Aus einer vom Roboter(arm) 10 mit seinem Endeffektor 13 auszuübenden, vorgegebenen Soll-Last $F_{cmd}$ und der von dem Kraft-Momenten-Sensor 12 als vom Roboter(arm) 10 bzw. dessen Endeffektor 13 ausgeübt erfassten Ist-Last wird eine Regeldifferenz $\Delta F$ ermittelt.

Mithilfe eines ein- oder mehrstufigen Tiefpassfilters 28 dieser Regeldifferenz $\Delta F$ wird ein erster Soll-Anteil $\Delta F_1$ ermittelt.

Dieser wird als Eingangssignal einem Kraftregler 22 zugeführt, der z. B. als ein PI-Regler ausgeführt ist.

Das Ausgangssignal des Kraftreglers 22 entspricht im Falle des vorliegenden Ausführungsbeispiels einem 6-dimensionalen Vektor, der Kraft- und Drehmomentenkomponenten umfasst.

Das Ausgangssignal des Kraftreglers 22 wird einem Block 23 zugeführt, der aufgrund des Ausgangssignals des Kraftreglers 22 und den aktuellen Winkelstellungen $q$ der Glieder des Roboter(arm)s 10 relativ zueinander eine Transformation der Kraft- und Drehmomentkomponenten in den sogenannten Gelenkraum transformiert. Dazu wird die inverse Jacobimatrix $J^{-1}$ verwendet. Die aktuellen Winkelstellungen $q$ der Glieder des Roboter(arm)s werden z. B. mittels geeigneter, z. B. am Roboter(arm) angeordneter Winkelmessvorrichtungen, beispielsweise Resolvern, ermittelt und sind weitere Eingangssignale.

Das Ausgangssignal des Blocks 23 ist das Eingangssignal eines weiteren Reglers 24, der ein integrierendes Verhalten aufweist und beispielsweise als PI (Proportional-Integral)-Regler ausgeführt ist. Das Ausgangssignal des Reglers 24 ist Drehmomenten zugeordnet, die die einzelnen elektrischen Antriebe 26 des Roboter(arm)s 10 bzw. deren elektrische Motoren aufbringen sollen.

Um z. B. die Schwerkraft des Roboter(arm)s 10 und/oder Reibung der Gelenke, Getriebe usw. zumindest teilweise zu kompensieren, umfasst die Steuerung 20 im Falle des vorliegenden Ausführungsbeispiels ein dynamisches bzw. Dynamikmodell 25, welches das dynamische Verhalten des Roboter(arm)s 10 modelliert. Dieses wird verwendet, um aufgrund der aktuellen Winkelstellungen $q$ der Glieder des Roboterarms 10 relativ zueinander, deren erste Ableitungen nach der Zeit $dq/dt$ und deren zweite Ableitungen nach der Zeit $d^2q/dt^2$ Drehmomente zu berechnen, die die elektrischen Antriebe 26 des Roboter(arm)s 10 bzw. deren elektrische Motoren aufbringen sollen, um z. B. die Reibung oder die Auswirkungen der Gravitation zumindest teilweise zu kompensieren. Die errechneten kompensierenden Drehmomente werden zu den mittels des Reglers 24 berechneten Drehmomenten addiert, wodurch Soll-Drehmomente $\tau_{\text{cmd, 1}}$ errechnet werden, welche die elektrischen Antriebe 26 aufbringen sollen.

In der Praxis weist das dynamische Modell 25 Unsicherheiten auf bzw. kann nur mit einer beschränkten Genauigkeit erstellt und/oder implementiert werden. Um bei einem Zusammenstoß der Struktur des Roboterarms 10 mit einem Gegenstand einen zu erwartenden Schaden am Roboter(arm) 10 und/oder am Gegenstand zumindest zu verkleinern, ist es im Falle des vorliegenden Ausführungsbeispiels vorgesehen, das Ausgangssignal des Reglers 24 zu begrenzen. Dies wird im Falle des vorliegenden Ausführungsbeispiels erreicht, indem der integrierende Anteil (I-Anteil) des Reglers 24 begrenzt wird (Anti Wind-up).

Im Falle des vorliegenden Ausführungsbeispiels wird der I-Anteil des Reglers 24 dynamisch begrenzt und/oder für jeden elektrischen Antrieb individuell begrenzt. Insbesondere ist es vorgesehen, dass der I-Anteil aufgrund der Unsicherheit bzw. Fehlerhaftigkeit des dynamischen Modells 25 begrenzt bzw. die Begrenzung des I-Anteils an der Unsicherheit bzw. Fehlerhaftigkeit des dynamischen Modells bemessen wird. Vorzugsweise wird dabei eine nicht exakt modellierte Reibung des Roboter(arm)s 10, d. h. Reibungen der Gelenke, gegebenenfalls verwendeter Getriebe usw. berücksichtigt. Auch kann eine aktuelle Winkelstellung der einzelnen Glieder des Roboter(arm)s 10 relativ zueinander und/oder der aktuellen Drehzahl der einzelnen elektrischen Motoren und/oder des aktuellen Zustands und Wirkungsgrads η, abhängig von der Leistungsflussrichtung (rück- oder vortreibendes Getriebe), berücksichtigt werden.

Im Falle des vorliegenden Ausführungsbeispiels wird die besagte Unsicherheit als Fehlerfunktion 27 aufgestellt. Diese kann überwiegend der ungefähren Modellabweichung der einzelnen Getriebemomente der elektrischen Antriebe 26 zugeordnet sein, insbesondere abhängig von der aktuellen Drehzahl der fraglichen elektrischen Motoren und/oder davon ob das fragliche Getriebe rücktreibend oder vortreibend betrieben wird.

Die Fehlerfunktion 27 kann insbesondere empirisch ermittelt werden, indem der fragliche Roboter(arm) 10 für verschiedene Achsenstellungen und Bewegungen der einzelnen Glieder des Roboter(arm)s 10 untersucht bzw. die Reibungen ermittelt oder zumindest abgeschätzt wurden. Die Fehlerfunktion kann auch aufgrund statistischer Methoden ermittelt worden sein, indem beispielsweise mehrere Roboter(arme) 10 desselben Typs bzw. derselben Gattung untersucht wurden.

Die Soll-Drehmomente $\tau_{\text{cmd, 1}}$ stellen einen ersten Soll-Anteil dar, der auf Basis eines ersten Regeldifferenz-Anteils $\Delta \boldsymbol{F}_1$ ermittelt wird, welcher auf Basis einer Tiefpassfilterung der Regeldifferenz $\Delta \boldsymbol{F}$ zwischen der vom Roboter(arm) 10 auszuübenden Soll-Last $\boldsymbol{F}_{\text{cmd}}$ und der mit dem Kraft-Momenten-Sensor 12 bzw. als vom Roboter ausgeübt erfassten Ist-Last auf Basis einer Proportional-Integral-Regelung 22, 24 mit begrenztem Integral-Anteil und eines Dynamikmodells 25 des Roboter(arm)s 10 ermittelt wird.

Auf Basis einer Differenz-Last zwischen der Regeldifferenz $\Delta \boldsymbol{F}$ und dem ersten Regeldifferenz-Anteil $\Delta \boldsymbol{F}_1$, wird ein zweiter Regeldifferenz-Anteil $\Delta \boldsymbol{F}_2$ ermittelt.

Auf Basis dieses zweiten Regeldifferenz-Anteils $\Delta \boldsymbol{F}_2$ wird in einer Störgrößenregelung 29, beispielsweise gemäß Gl. (1) und damit auf Basis eines abgespeicherten Massenparameters, der die abtriebsseitige Massenmatrix $\boldsymbol{A}$ und die Diagonalmatrix diag($J_m$) der Trägheitsmomente der Antriebe aufweist bzw. bestimmt, sowie gleichsinnig zum zweiten Regeldifferenz-Anteil $\Delta \boldsymbol{F}_2$, ein zweiter Soll-Anteil $\tau_{\text{cmd, 2}}$ derart ermittelt, dass der Roboter(arm) 10 einer Reaktionskraft infolge einer Kollision ausweicht bzw. diese Kollisionsenergie motorseitig absorbiert.

Die beiden Soll-Anteile $\tau_{\text{cmd, 1}}$, $\tau_{\text{cmd, 2}}$) werden addiert, wobei $\tau_{\text{cmd, 2}}$ gegegebenfalls zusätzlich, insbesondere mit einem PT1-Glied kleiner Zeitkonstante (T1 << T2-Block 24), tiefpassgefiltert wurde, und die Antriebe 26 auf Basis hiervon kommandiert. Entsprechend bilden die beiden Soll-Anteile $\tau_{\text{cmd, 1}}$, $\tau_{\text{cmd, 2}}$ gemeinsam bzw. deren Summe Ausgangssignale bzw. Soll-Drehmomente, die z. B. in entsprechende elektrische Soll-Ströme für die elektrischen Antriebe 26 bzw. der Motoren umgerechnet werden, sodass beispielsweise die elektrischen Antriebe 26 in einer für den Fachmann bekannten Weise entsprechend geregelt werden können.

In einer nicht dargestellten Weiterbildung wird die Regeldifferenz $\Delta \boldsymbol{F}$ in einer Ausführung zunächst tiefpassgefiltert. Die Regeldifferenz $\Delta \boldsymbol{F}$ oder diese tiefpassgefilterte Regeldifferenz $\Delta \boldsymbol{F}_f$, wird dann betragsmäßig auf einen vorgegebenen Sättigungswert $\Delta \boldsymbol{F}_{f,\,max}$ begrenzt, beispielsweise gemäß:

$$\Delta \boldsymbol{F}_{f,s} = \begin{cases} -\Delta \boldsymbol{F}_{f,\,max} & \Leftarrow \Delta \boldsymbol{F}_f < -\Delta \boldsymbol{F}_{f,\,max} \\ \Delta \boldsymbol{F}_f & \Leftarrow -\Delta \boldsymbol{F}_{f,\,max} \leq \Delta \boldsymbol{F}_f \leq \Delta \boldsymbol{F}_{f,\,max} \\ \Delta \boldsymbol{F}_{f,\,max} & \Leftarrow \Delta \boldsymbol{F}_f > \Delta \boldsymbol{F}_{f,\,max} \end{cases}$$

Anschließend bzw. zwischen Sättigung und Tiefpassfilter wird diese, gegebenenfalls tiefpassgefilterte, auf den Sättigungswert $\Delta \boldsymbol{F}_{f,\,max}$ begrenzte Regeldifferenz $\Delta \boldsymbol{F}_{f,s}$ noch in ihrer Anstiegsrate d($\Delta \boldsymbol{F}_{f,s}$)/dt auf eine vorgegebene Anstiegsrate begrenzt, beispielsweise gemäß:

$$d(\Delta \boldsymbol{F}_{f,s})/dt = \begin{cases} -(d(\Delta \boldsymbol{F}_{f,s})/dt)_{max} & \Leftarrow d(\Delta \boldsymbol{F}_{f,s})/dt < -(d(\Delta \boldsymbol{F}_{f,s})/dt)_{max} \\ d(\Delta \boldsymbol{F}_{f,s})/dt & \Leftarrow -(d(\Delta \boldsymbol{F}_{f,s})/dt)_{max} \leq d(\Delta \boldsymbol{F}_{f,s})/dt \leq (d(\Delta \boldsymbol{F}_{f,s})/dt)_{max} \\ (d(\Delta \boldsymbol{F}_{f,s})/dt)_{max} & \Leftarrow \Delta\, d(\Delta \boldsymbol{F}_{f,s})/dt > (d(\Delta \boldsymbol{F}_{f,s})/dt)_{max} \end{cases}$$

anschließend (erneut) tiefpassgefiltert und bildet dann den ersten Regeldifferenz-Anteil $\Delta \boldsymbol{F}_1$.

Gleichermaßen kann die vorstehend genannte betragsmäßige Begrenzung auf einen vorgegebenen Sättigungswert $\Delta F_{f,\,max}$ vorteilhaft auch vor dem vorstehend genannten Tiefpassfilter und/oder dem vorstehend genannte Ratenlimiter durchgeführt werden. Hierdurch kann vorteilhaft ein Windup-Effekt im Filter vermieden oder reduziert werden.

In einer Abwandlung kann die vorstehend genannte Begrenzung auf den vorgegebenen Sättigungswert und/oder die vorgegebene Anstiegsrate auch asymmetrisch sein, d.h. in obigen Gleichungen $-\Delta F_{f,\,max} \rightarrow \Delta F_{f,\,min} \neq -\Delta F_{f,\,max}$ bzw. $-(d(\Delta \boldsymbol{F}_{f,s})/dt)_{max} \rightarrow (d(\Delta \boldsymbol{F}_{f,s})/dt)_{min} \neq -(d(\Delta \boldsymbol{F}_{f,s})/dt)_{max}$.

Die Differenz zwischen der gegebenenfalls tiefpassgefilterten, aber noch nicht auf den Sättigungswert $\Delta F_{f,\,max}$ begrenzten Regeldifferenz $\Delta F$ bzw. $\Delta F_f$ und der gegebenenfalls tiefpassgefilterten, auf den Sättigungswert $\Delta F_{f,\,max}$ begrenzten Regeldifferenz $\Delta F_{f,\,s}$ wird ebenfalls tiefpassgefiltert und bildet dann einen weiteren Regeldifferenz-Anteil, der mit der transponierten Jacobimatrix $\boldsymbol{J}^T$ der Pose $\boldsymbol{x}$ des Endeffektors 13 des Roboter(arm)s 10 multipliziert und den beiden Soll-Anteilen $\tau_{cmd,\,1}$, $\tau_{cmd,\,2}$ hinzuaddiert wird, wobei in dieser Weiterbildung dann der zweite Regeldifferenz-Anteil $\Delta F_2$ als Differenz zwischen der Regeldifferenz und der Summe des ersten Regeldifferenz-Anteils $\Delta F_1$ und des weiteren Regeldifferenz-Anteils, d.h. wiederum auf Basis einer Differenz-Last zwischen der Regeldifferenz $\Delta F$ und dem ersten Regeldifferenz-Anteil $\Delta F_1$ sowie in dieser Weiterbildung zusätzlich auf Basis des weiteren Regeldifferenz-Anteils ermittelt wird.

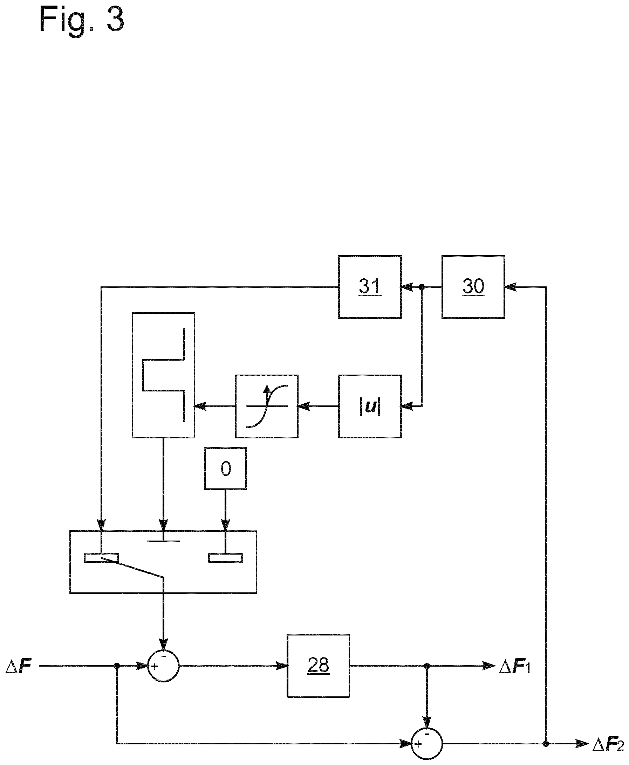

In einer in Fig. 3 dargestellten Abwandlung kann $\Delta F_2$ auch durch einen oder mehrere Square-Root-Raised-Cosine-Filter ("SRRC Filter") 30, 31 vor den Tiefpassfilter 28 zurückgeführt werden. Dies ist insbesondere bei in etwa bekannter zu erwartender Pulsbreite vorteilhaft, auf die dieser in Fig. 3 dargestellte Filter von $\Delta F_2$ in einer Ausführung eingestellt wird ("Pulse shaping") und die in einer Ausführung zwischen 2 und 30 ms liegen. Mit einem Schwellwertvergleich auf Basis des Kraftstoßes kann der Ausgang dieses Filters zur Detektion eines ausreichend starken Pulses mit bestimmter Pulsbreite im Kraftsignal eingesetzt werden. Wird ein Puls detektiert, kann dieser mit negativem Vorzeichen dem Tiefpassfilter unmittelbar zugeführt werden und somit vorteilhaft energetisch über den Filterzustand neutralisiert werden. Dabei erzeugt der erste SRRC 30 einen normierten Ausgang für den Schwellwertvergleich auf Basis des physikalischen Kraftstoßes. Weiterhin kann der originale Signalverlauf des detektierten Kraftstoßes aus dem ersten SRRC 31 durch Weitergabe des Ausgangssignals in den zweiten SRRC 31, jedoch mit negativem Vorzeichen, weitgehend wiederhergestellt und letztlich zur Kompensation an den Tiefpassfilter eingegeben werden

Bezugszeichenliste

| | |
|---|---|
| 10 | Roboter |
| 11 | Endflansch |
| 12 | Kraft-Momenten-Sensor |
| 13 | Endeffektor |
| 20 | Steuerung |
| 22 | PI-Kraftregler |
| 23 | Block |
| 24 | PI-Kraftregler |
| 25 | Dynamikmodell |
| 26 | Antrieb |
| 27 | Fehlerfunktion |
| 28 | Tiefpassfilter(ung) |
| 29 | Störgrößenregler |
| 30,31 | SRRC-Filter |

| | |
|---|---|
| $\boldsymbol{F}_{cmd}$ | Soll-Last |
| $\Delta \boldsymbol{F}$ | Regeldifferenz |
| $\Delta \boldsymbol{F}_1$ | erster Regeldifferenz-Anteil |
| $\Delta \boldsymbol{F}_2$ | zweiter Regeldifferenz-Anteil |
| $\boldsymbol{q} = [q_1,...,q_7]^T$ | Gelenkwinkel |

$\tau_{cmd, 1}$ erster Soll-Anteil

$\tau_{cmd, 2}$ zweiter Soll-Anteil

**Patentansprüche**

1. Verfahren zur Kraftregelung eines Roboters (10), wobei:

   - Antriebe (26) des Roboters auf Basis eines ersten Soll-Anteils ($\tau_{cmd, 1}$) und eines zweiten Soll-Anteils ($\tau_{cmd, 2}$) kommandiert werden;

   **dadurch gekennzeichnet, dass**

   - der erste Soll-Anteil auf Basis eines ersten Regeldifferenz-Anteils ($\Delta F_1$) ermittelt wird, der auf Basis wenigstens einer Tiefpassfilterung (28) einer Regeldifferenz ($\Delta F$) zwischen einer vom Roboter auszuübenden Soll-Last ($F_{cmd}$) und einer als vom Roboter ausgeübt erfassten Ist-Last ermittelt wird; und
   - der zweite Soll-Anteil ($\tau_{cmd, 2}$) auf Basis eines zweiten Regeldifferenz-Anteils ($\Delta F_2$) ermittelt wird, der auf Basis einer Differenz-Last zwischen der Regeldifferenz und dem ersten Regeldifferenz-Anteil ermittelt wird.

2. Verfahren nach Anspruch 1, **dadurch gekennzeichnet, dass** der zweite Soll-Anteil derart ermittelt wird, dass der Roboter einer Reaktionskraft infolge einer Kollision ausweicht.

3. Verfahren nach einem der vorhergehenden Ansprüche, **dadurch gekennzeichnet, dass** der zweite Soll-Anteil gleichsinnig zu dem zweiten Regeldifferenz-Anteil ist.

4. Verfahren nach einem der vorhergehenden Ansprüche, **dadurch gekennzeichnet, dass** der zweite Soll-Anteil auf Basis eines abgespeicherten Massenparameters des Roboters ermittelt wird.

5. Verfahren nach einem der vorhergehenden Ansprüche, **dadurch gekennzeichnet, dass** der erste Soll-Anteil auf Basis einer Proportional-Integral-Regelung (22, 24), insbesondere mit begrenztem Integral-Anteil, und/oder eines Dynamikmodells (25) des Roboters ermittelt wird.

6. System zur Kraftregelung eines Roboters (10), das zur Durchführung eines Verfahrens nach einem der vorhergehenden Ansprüche eingerichtet ist.

7. Computerprogrammprodukt mit einem Programmcode, der auf einem von einem Computer lesbaren Medium gespeichert ist, eingerichtet zur Durchführung eines Verfahrens nach einem der Ansprüche 1-5.

**Claims**

1. A method of providing force control of a robot (10), wherein:

   - drives (26) of the robot are commanded on the basis of a first target component ($\tau_{cmd, 1}$) and on the basis of a second target component ($\tau_{cmd, 2}$);

   **characterised in that**

   - the first target component is determined on the basis of a first control difference component ($\Delta F_1$) which is determined on the basis of at least one low-pass filtering (28) of a control difference ($\Delta F$) between a target load ($F_{cmd}$) to be exerted by the robot and an actual load detected as being exerted by the robot; and
   - the second target component ($\tau_{cmd, 2}$) is determined on the basis of a second control difference component ($\Delta F_2$) which is determined on the basis of a difference load between the control difference and the first control difference component.

2. The method in accordance with claim 1, **characterised in that** the second target component is determined in such a way that the robot avoids a reaction force as a result of a collision.

3. The method in accordance with any one of the preceding claims, **characterised in that** the second target component is oriented in the same direction as the second control difference component.

4. The method in accordance with any one of the preceding claims, **characterised in that** the second target component is determined on the basis of a stored mass parameter of the robot.

5. The method in accordance with any one of the preceding claims, **characterised in that** the first target component is determined on the basis of a proportional-integral control (22, 24), in particular with a limited integral component, and/or on the basis of a dynamics model (25) of the robot.

6. A system for providing force control of a robot (10), which system is used to carry out a method in accordance with any one of the preceding claims.

7. A computer program product which comprises a program code which is stored on a medium readable by a computer, wherein the program code is adapted to carry out a method in accordance with any one of the claims 1 to 5.


**Revendications**

1. Procédé pour réguler la force d'un robot (10), dans lequel :

   - des entraînements (26) du robot sont commandés sur la base d'une première composante théorique ($\tau_{\mathrm{cmd},\,1}$) et d'une deuxième composante théorique ($\tau_{\mathrm{cmd},\,2}$) ;

   **caractérisé en ce que**

   - la première composante théorique est déterminée sur la base d'une première composante de différence de régulation ($\Delta F_1$), qui est déterminée sur la base d'au moins un filtrage passe-bas (28) d'une différence de régulation ($\Delta F$) entre une charge théorique ($F_{\mathrm{cmd}}$) destinée à être exercée par le robot et une charge réelle acquise comme exercée par le robot ; et
   - la deuxième composante théorique ($\tau_{\mathrm{cmd},\,2}$) est déterminée sur la base d'une deuxième composante de différence de régulation ($\Delta F_2$), qui est déterminée sur la base d'une charge différentielle entre la différence de régulation et la première composante de différence de régulation.

2. Procédé selon la revendication 1, **caractérisé en ce que** la deuxième composante théorique est déterminée de telle sorte que le robot échappe à une force de réaction à la suite d'une collision.

3. Procédé selon l'une quelconque des revendications précédentes, **caractérisé en ce que** la deuxième composante théorique est dans le même sens que la deuxième composante de différence de régulation.

4. Procédé selon l'une quelconque des revendications précédentes, **caractérisé en ce que** la deuxième composante théorique est déterminée sur la base d'un paramètre massique du robot mis en mémoire.

5. Procédé selon l'une quelconque des revendications précédentes, **caractérisé en ce que** la première composante théorique est déterminée sur la base d'une régulation proportionnelle intégrale (22, 24), en particulier avec une composante intégrale limitée, et/ou un modèle dynamique (25) du robot.

6. Système pour réguler la force d'un robot (10), qui est conçu pour la mise en oeuvre d'un procédé selon l'une quelconque des revendications précédentes.

7. Produit-programme informatique avec un code de programme, qui est mis en mémoire sur un support lisible par un ordinateur, pour la mise en oeuvre d'un procédé selon l'une quelconque des revendications 1-5.

## Fig. 1

# Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011003506 A1